# EUROPEAN PATENT APPLICATION

(11) **EP 4 394 062 A1**
(43) Date of publication of application: **03.07.2024**
(21) Application number: 22861144.8
(22) Date of filing: 09.08.2022
(51) Int. Cl.: C22B 7/00, F27B 3/14, F27B 3/16, F27D 1/00

(54) **ELECTRIC FURNACE AND METHOD FOR PRODUCING VALUABLE METAL**

(30) Priority: 27.08.2021 JP 2021139299
(71) Applicant: SUMITOMO METAL MINING CO., LTD., Tokyo 105-8716 (JP)
(72) Inventor: MAEBA, Kazunari, Niihama-shi, Ehime 792-0002 (JP)
(74) Representative: Jones, Nicholas Andrew
(86) International application number: PCT/JP2022/030429
(87) International publication number: WO 2023/026854

(57) **Abstract**

Provided is a technology for executing stable processing by extending the furnace refractory life in an electric furnace for heating and melting a raw material containing a valuable metal. The present invention provides an electric furnace 1 for heating and melting a raw material 2 containing a valuable metal, the electric furnace 1 including: a furnace body 11; and a plurality of electrodes 12 that are provided so as to hang down into the interior of the furnace body 11 from a top section thereof. The raw material 2 is heated and melted in the furnace body 11 by energizing the electrodes 12 and a molten material consisting of a slag 3 and a metal 4 is generated. The electric furnace 1 is configured so that the overall heat transfer coefficient of a side wall 11B of the furnace body 11 is lower than the overall heat transfer coefficient of a side wall 11A of the furnace body 11, the side wall 11B coming into contact with a layer of the metal 4 formed in a bottom layer, the side wall 11A coming into contact with a layer of the slag 3 formed in a top layer, and said layers being formed in the molten material due to gravity separation.

## Description

### TECHNICAL FIELD

The present invention relates to an electric furnace for heating and melting a raw material containing a valuable metal, and a method for producing a valuable metal using the electric furnace.

### BACKGROUND ART

In recent years, lithium ion batteries have been widely used as a lightweight and high power secondary battery. Well known lithium ion batteries have a structure in which a negative electrode material, a positive electrode material, a separator and an electrolyte solution are sealed in an outer case.

The outer case includes a metal such as aluminum (Al) or iron (Fe). The negative electrode material includes a negative active material (graphite, etc.) bonded to a negative current collector (copper foil, etc.)
The positive electrode material includes a positive active material (lithium nickelate, lithium cobaltate, etc.) bonded to a positive current collector (aluminum foil, etc.)
The separator includes a porous polypropylene resin film and the like. The electrolyte solution includes an electrolyte such as lithium hexafluorophosphate (LiPF₆).

One of the major applications of lithium ion batteries is hybrid electric vehicles and electric vehicles. Therefore, a large number of on-board lithium ion batteries are expected to be discarded in the future with the life cycle of the vehicles. There also exist lithium ion batteries which are discarded as defective products during the production. It has been required to reuse such used batteries and defective batteries produced during the production (hereinafter, referred to as waste lithium ion battery") as a resource.

A pyrometallurgical process including fusing the whole amount of waste lithium ion batteries in a high temperature furnace has been proposed as a reusing procedure. The pyrometallurgical process includes melting crushed waste lithium ion batteries, and separating and recovering a valuable metal to be recovered, typified by cobalt (Co), nickel (Ni) and copper (Cu), and a low-added-value metal typified by iron (Fe) and aluminum (Al) by utilizing the difference in oxygen affinity between them. In this procedure, the low-added-value metal is oxidized as much as possible to form slag, whereas the valuable metal is inhibited from being oxidized as much as possible and is recovered as alloy.

Patent Document 1 discloses a technique using such pyrometallurgical process. Specifically, a method for recovering cobalt from lithium ion batteries including aluminum and carbon is disclosed, which includes preparing a bath furnace including a means for injecting oxygen, preparing a raw material including CaO as a slag forming agent and the lithium ion batteries, injecting oxygen and also feeding the raw material to the furnace to reduce at least part of cobalt and collect it in the metal phase, and separating slag from the metal phase by tapping (claim 1 in Patent Document 1).

### Citation List

### Patent Document

Patent Document 1: Japanese Patent No. 5818798

### DISCLOSURE OF THE INVENTION

### Problems to be Solved by the Invention

Waste lithium ion batteries include various components, and some of the components have a high melting point.
Therefore, waste lithium ion batteries are required to be melted at a high temperature, for example, a temperature of 1500°C or higher.

In addition, the control of the oxidation reduction degree in the melting treatment is important to efficiently recover a valuable metal. Waste lithium ion batteries include, for example, a large amount of impurities such as carbon (C), aluminum (Al), fluorine (F) and phosphorus (P). Among these, carbon (C) acts as a reductant, and thus hinders the oxidation and reduction of other impurities when an excessive amount of carbon remains. An excessive amount of carbon also hinders the separation of alloy (metal) and slag. Furthermore, phosphorus (P) is an element which is relatively easily reduced. Because of this, the recovery rate of the valuable metal is reduced when the oxidation reduction degree is not strictly controlled. That is, when the reduction degree is excessively high, phosphorus is not oxidized and removed, and is incorporated into the metal together with the valuable metal. On the other hand, when the reduction degree is excessively low, the valuable metal is also oxidized, and thus cannot be recovered as the alloy (metal).

In view of such circumstances, conventional melting treatments of waste lithium ion batteries have used an induction furnace (inductive heating furnace), in particular an indirect heating induction furnace, which can be maintained at high temperatures and easily controls the oxidation reduction degree. The induction furnace is a heating furnace using electromagnetic induction, and includes a coil, and a crucible provided in the interior of the coil. An alternating magnetic field is generated when applying an alternating current to the coil in the induction furnace, and an induced current is generated in the crucible or a material to be treated contained in the interior thereof by this alternating magnetic field. The crucible or the material to be treated is heated by Joule heat of the induced current.

When melting waste lithium ion batteries, a double crucible having an oxide-based crucible provided in the interior of a graphite crucible is used, and waste lithium ion batteries are charged into the oxide-based crucible. When applying an electric current to the coil, the graphite crucible is inductively heated, and the generated heat is transferred to the waste lithium ion batteries through the oxide-based crucible. Since the induction furnace uses an external heating method using induction heating, it is not required to provide a graphite electrode in the interior of the crucible. Therefore, contamination by carbon can be suppressed as much as possible. In addition, since heating can be performed under a relatively closed atmosphere, the oxidation reduction degree can be controlled by adjusting atmospheric gas components and the pressure thereof.

The melting treatment using the induction furnace, however, has had a problem. That is, this is required to be maintained at a high temperature, for example, a temperature of 1500°C or higher, to melt a charged material containing a valuable metal such as waste lithium ion batteries. The induction furnace, however, uses an external heating method, and thus heat transfer losses are caused. In order to maintain the charged material at the melting temperature (e.g. 1500°C or higher), for example, the temperature of a refractory (oxide-based crucible) containing the charged material is required to be increased to the melting temperature or higher, specifically 1600°C or higher, and retained at the temperature. Erosion of the refractory by slag is severe at such high temperature, and it is difficult to suppress refractory corrosion. This also has shortened the refractory (crucible) life.

As a result of investigations of such problem, the present inventors found that compared to when using an induction furnace, the refractory corrosion could be significantly suppressed using a submerged arc furnace including an electrode in the interior thereof (hereinafter, simply referred to as "electric furnace") as a melting furnace by melting a raw material such as waste lithium ion batteries with heat from the arc itself and Joule heat. It was also found that even when a graphite electrode is used as the electrode, a valuable metal such as cobalt could be obtained at a high recovery rate and simultaneously impurities such as phosphorus and manganese could be efficiently removed by controlling the oxidation reduction degree with consideration for the amount of carbon from the electrode.

There is, however, a problem also when melting waste lithium ion batteries using the electric furnace. Specifically, the problem is as follows. Since the volume of the slag retained in the electric furnace is once or more greater than the volume of the metal, that is, the thickness of the slag layer formed is once or more greater than the thickness of the metal layer, heat to melt the raw material flows from the top surface of the furnace body to the side surface or bottom surface of the furnace body. At this time, the temperature of the metal layer is not easily increased, and in order to maintain the temperature, the temperature of the slag layer has to be increased. Therefore, a coating is not easily generated between the slag layer and the furnace body refractory in a region where the slag layer is located, and consequently the furnace body refractory life in the slag layer becomes short.

The present invention has been proposed in view of such circumstances, and an object thereof is to provide an electric furnace for heating and melting a raw material containing a valuable metal, which electric furnace can extend the furnace body refractory life and perform stable treatments, and also a method for producing a valuable metal using the electric furnace.

### Means for Solving the Problems

As a result of repeated diligent investigations, the present inventors found that the above-described problem could be solved using an electric furnace including an electrode in the interior thereof for reduction melting of a raw material, the electric furnace being made so that the overall heat transfer coefficient of a side wall of the furnace body which is to come into contact with a metal layer formed in a lower layer in a molten material obtained is lower than the overall heat transfer coefficient of a side wall of the furnace body which is to come into contact with a slag layer formed in an upper layer in the molten material, thereby completing the present invention.

(1) A first aspect of the present invention is an electric furnace for heating and melting a raw material containing a valuable metal, the electric furnace including a furnace body, and a plurality of electrodes provided so as to hang down from the top section of the furnace body to the interior thereof, in which the electric furnace heats and melts the raw material in the furnace body by applying an electric current to the electrodes to generate a molten material consisting of slag and metal, and the electric furnace is made so that the overall heat transfer coefficient of a side wall of the furnace body which is to come into contact with a layer of the metal formed in a lower layer in gravity separation of a molten material obtained is lower than the overall heat transfer coefficient of a side wall of the furnace body which is to come into contact with a layer of the slag formed in an upper layer in the gravity separation of the molten material.
(2) A second aspect of the present invention is the electric furnace as described in the first aspect, in which a metal hole to discharge the metal is provided on a side wall of the furnace body corresponding to a position where the layer of the metal is formed, and the electric furnace is made so that the overall heat transfer coefficient of a side wall of the furnace body below the upper end of the metal hole is lower than the overall heat transfer coefficient of a side wall of the furnace body above the upper end of the metal hole.
(3) A third aspect of the present invention is the electric furnace as described in the first or second aspect, in which the side wall of the furnace body includes at least an iron shell, a first refractory layer formed by an unshaped refractory or a shaped refractory, and a second refractory layer formed by a shaped refractory in order from the outside thereof.
(4) A fourth aspect of the present invention is the electric furnace as described in any one of the first to third aspects, in which the electric furnace is used for producing a valuable metal from a raw material including waste lithium ion batteries.
(5) A fifth aspect of the present invention is a method for producing, from a raw material containing a valuable metal including copper (Cu), the valuable metal, the method including a reduction melting step of charging the raw material into a melting furnace and performing a reduction melting treatment of the raw material to obtain a molten material including slag and metal containing the valuable metal, in which the electric furnace as described in the first aspect is used as the melting furnace.
(6) A sixth aspect of the present invention is the method for producing a valuable metal as described in the fifth aspect, in which, in the molten material obtained by the reduction melting treatment in the reduction melting step, a value obtained by dividing a thickness of a layer of the slag formed in an upper layer in the gravity separation by a thickness of a layer of the metal formed in a lower layer is 1 or more.
(7) A seventh aspect of the present invention is the method for producing a valuable metal as described in the seventh aspect, in which the raw material includes waste lithium ion batteries.
(8) An eighth aspect of the present invention is the method for producing a valuable metal as described in any one of the fifth to seventh aspects, in which the metal obtained after the reduction melting step contains 30 mass% or more of copper.
(9) A nineth aspect of the present invention is the method for producing a valuable metal as described in any one of the fifth to eighth aspects, in which in the reduction melting step, the reduction melting treatment is performed so that the metal temperature is 1300°C or higher and 1400°C or lower and the slag temperature is 1500°C or higher and 1600°C or lower.

### Effects of the Invention

According to the present invention, when producing a valuable metal from a raw material including e.g. waste lithium ion batteries, damage to a furnace for a melting treatment of the raw material is suppressed, and an efficient treatment can be performed.

### BRIEF DESCRIPTION OF THE DRAWINGS

Fig. 1 is a diagram showing an example of the structure of an electric furnace;
Fig. 2 is a diagram showing an example of the structure of a side wall (furnace wall) of an electric furnace; and
Fig. 3 is a flow chart showing an example of the flow of a method for producing a valuable metal from waste lithium ion batteries.

### PREFERRED MODE FOR CARRYING OUT THE INVENTION

A specific embodiment of the present invention (hereinafter referred to as "present embodiment" will now be described. It should be noted that the present invention is not limited to the embodiment below and various modifications can be made without changing the gist of the present invention.

### <<1. Electric furnace>>

The electric furnace according to the present embodiment is an electric furnace for heating and melting a raw material containing a valuable metal. The electric furnace can be used, for example, in a treatment in a reduction melting step of heating and melting a raw material including waste lithium ion batteries for reduction thereof to obtain a molten material consisting of slag and metal (alloy) including a valuable metal, and the step will be described below in detail.

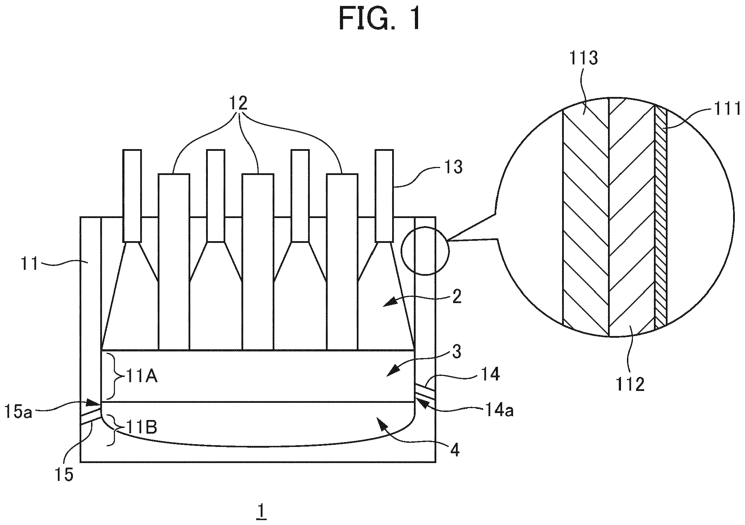

Fig. 1 is a diagram showing an example of the structure of the electric furnace according to the present embodiment. As shown in Fig. 1, the electric furnace 1 includes a furnace body 11, and a plurality of electrodes 12 provided so as to hang down from the top section of the furnace body 11 to the interior thereof. The electric furnace 1 also includes raw material injection pipes 13 to charge (inject) the raw material 2 to be melted. The electric furnace 1 heats and melts the charged raw material by applying an electric current to the electrodes 12 to generate the molten material consisting of the slag 3 and the metal 4 in the furnace body 1.

It should be noted that Fig. 1 shows the raw material 2 charged from the raw material injection pipes 13, and a state in which the molten material consisting of the slag 3 and the metal 4 is generated by heating and melting the raw material 2. In addition, the layer of the slag 3 (slag layer) and the layer of the metal 4 (metal layer) are generated in the upper layer and the lower layer respectively due to gravity separation in the molten material.

The electric furnace 1 according to the present embodiment is characterized by being made so that the overall heat transfer coefficient of a side wall 11B of the furnace body 11 in a region coming into contact with the layer of the metal 4, is lower than the overall heat transfer coefficient of a side wall 11A of the furnace body 11 in a region coming into contact with the layer of the slag 3, the layers being generated by heating and melting the raw material 2.

The "overall heat transfer coefficient" of the side walls 11A and 11B of the furnace body 11 indicates a coefficient showing a degree in which heat is transferred from the molten material in the vicinity of the inner side wall of the furnace to the vicinity of the outer side wall of the furnace, and can be expressed in the unit "W/m²·K."

In the electric furnace 1, the raw material charged into the interior (inside the furnace) is melted by applying an electric current to the electrodes 12 to generate heat from an arc discharge and Joule heat. As described above, in the electric furnace 1, the corrosion of refractories included in the furnace wall of the furnace body 11 (furnace wall refractories) can be prevented by employing an internal heating method in which heating is performed with the electrodes 12 in the furnace. That is, in the internal heating method, the molten body (molten raw material) located in the vicinity of the electrodes 12 has the highest temperature, and thus the furnace wall is be maintained at a lower temperature than that of the molten body. It should be noted that compared to when using an electric furnace, when using e.g. an induction furnace, an external heating method for heating a raw material by heat transfer from a crucible in the furnace is used, and it is required to maintain the crucible at a higher temperature than that of the molten body, and thus there is a problem in that crucible refractory corrosion is greater.

The electric furnace 1 is preferably a submerged arc furnace. The submerged arc furnace is one of arc furnaces. The arc furnaces use heat generation of the arc itself, and can achieve local heating and rapid heating using ultra-high temperature and high energy density. Among the arc furnaces, a direct arc furnace has an electrode in space provided above a material to be heated, and an arc is generated in the space to heat the material to be heated. In addition, an indirect arc furnace generates an arc between a plurality of electrodes to heat the material to be heated mainly by radiation heat. On the other hand, the submerged arc furnace has a plurality of electrodes embedded (submerged) in the material to be heated, and uses Joule heat (electric resistance heat) together with heat from the arc discharge for heating. Specifically, the arc discharge is generated between the electrode tip and the material to be heated, and this arc heats the material to be heated (raw material) in the submerged arc furnace. At the same time, an electric current flows between an electrode and an electrode through the material to be heated (among one electrode, the material to be heated and another electrode), and the material to be heated (slag) generates heat by Joule heat.

The submerged arc furnace is characterized by being capable of efficient heating by a small amount of electric power. In the direct arc furnace and the indirect arc furnace, the arc discharge is generated above the material to be heated. A considerable part of the generated heat is thus released into an atmosphere, and energy losses are greater. In addition, dust is easily generated from the material to be heated due to impacts by the arc, and it is required to provide a dust treating means. Furthermore, when an electrode is close to the furnace wall, the furnace wall refractories are easily damaged by heat, which may have an adverse effect on the durability of the refractories. Contrarily, a small amount of heat is released in the submerged arc furnace since the electrodes are covered with the material to be heated. In addition, the submerged arc furnace has less dust generation and less heat damage to the refractories, and thus can reduce costs for the dust treatment and replacement of refractories. From these reasons, the valuable metal can be recovered at high efficiency and lower costs preferably using the submerged arc furnace as the electric furnace 1.

In particular, when the raw material including waste lithium ion batteries is heated and melted, the amount of the slag generated is about 3 times larger than the amount of the alloy (metal) generated in terms of volume ratio. It is important to ensure heat transfer to the alloy through the slag in order to maintain the alloy to a molten state. Since lithium components included in waste lithium ion batteries form the slag and thus have a great effect on refractory erosion at high temperatures, it is also important to suppress the erosion. In this respect, since the direct arc furnace and indirect arc furnace locally heat only the surface of the slag by the arc discharge, it is required to increase electric power to fuse the whole alloy. Contrarily, the submerged arc furnace uses not only the arc discharge but also Joule heat, and thus heat conduction to the alloy through the slag effectively proceeds. Therefore, efficient heating can be performed even by a small amount of electric power. In addition, since the electrode tip is embedded in the slag in the submerged arc furnace, heat distribution is relatively uniform and heat spots are not easily generated, and thus refractory corrosion can be suppressed.

Examples of the target to be heated and melted (raw material containing a valuable metal) include a raw material containing at least copper (Cu) as a valuable metal such as waste lithium ion batteries. In order to heat and melt the raw material containing copper such as waste lithium ion batteries as described above, operations at high temperatures are required, and also almost 100% of copper in the raw material is distributed to the metal. When heating and melting the raw material including waste lithium ion batteries, for example, the grade of copper included in the metal generated is 30 mass% or more. The heat conductivity of copper is much larger, about 5 times, than that of other components included in the metal (elements of the iron group such as nickel, cobalt and iron).

Therefore, the metal 4 including copper easily delivers heat from the layer of the slag 3 to the furnace wall surface (refractory surface) 11B of the electric furnace 1, with which the layer of the metal 4 comes into contact, with reference to Fig. 1. Therefore, in order to maintain the temperature of the layer of the metal 4 in operations at high temperatures, it is required to further increase the temperature of the slag 3. When increasing the temperature of the slag 3, however, the wear of the side wall 11A refractories which are in contact with the layer of the slag 3 becomes significant, and also costs for electric power used in the electric furnace 1 significantly increase. It should be noted that metal obtained in conventional smelting using an electric furnace includes the elements of the iron group or alloys thereof, and the phenomenon in which the metal temperature cannot be maintained as described above has not been caused.

Therefore, the electric furnace 1 according to the present embodiment is characterized by being made so that the overall heat transfer coefficient of the side wall 11B of the furnace body 11 in a region which is to come into contact with the layer of the metal 4 is lower than the overall heat transfer coefficient of the side wall 11A of the furnace body 11 in a region which is to come into contact with the layer of the slag 3, the layers being generated by heating and melting the raw material 2.

According to the electric furnace having the side wall structure as described above, even when treating a raw material including as a valuable metal copper (Cu), which is distributed to the metal by heating and melting, the wear of the furnace wall refractories included in the electric furnace can be suppressed to extend the life thereof, and stable treatments can be performed.

The electric furnace 1 has at least a metal hole 15 to discharge the metal 4 by tapping on the side wall of the furnace body 11 corresponding to a position where the layer of the metal 4 is formed. Therefore, the "side wall which is to come into contact with the layer of the slag 3" and "side wall which is to come into contact with the layer of the metal 4" can be each defined based on the metal hole 15. Specifically, the "side wall which is to come into contact with the layer of the slag 3" means the side wall of the furnace body 11 in a region above the upper end 15a of the metal hole 15, and the "side wall in a region which is to come into contact with the layer of the metal 4" means the side wall of the furnace body 11 in a region below the upper end 15a of the metal hole 15.

The electric furnace 1 can also have a slag hole 14 to discharge the slag 3 by tapping on the side wall of the furnace body 11 corresponding to the position where the layer of the slag 3 is formed. In this case, the "side wall which is to come into contact with the layer of the slag 3" can be also defined as the side wall of the furnace body 11 in a region above the lower end 14a of the slag hole 14. In addition, the "side wall which is to come into contact with the layer of the metal 4" can be also defined as the side wall of the furnace body 11 in a region below the lower end 14a of the slag hole 14.

In the electric furnace 1 having the structure as described above, the inner side wall of the furnace body 11 in the regions which are to come into contact with the layers of the metal 4 and the slag 3 is preferably formed by a refractory brick. As shown in Fig. 1, for example, the side wall includes at least an iron shell 111, a first refractory layer 112 formed by an unshaped refractory or a shaped refractory, and a second refractory layer 113 formed by a shaped refractory in order from the outside thereof. The overall heat transfer coefficients of the side walls 11A and 11B can be adjusted, for example, by providing e.g. a cooling jacket and a heat insulating sheet in predetermined regions in the side wall structure.

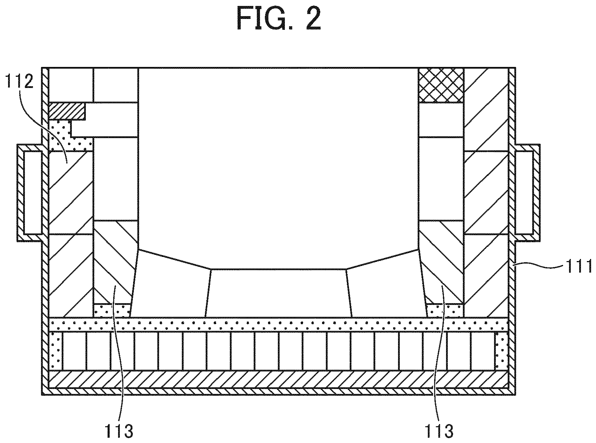

For example, Fig. 2 shows a specific example of the side wall structure, and shows the side wall structure of an electric furnace used in Example described below. In this electric furnace 1, the structure of the furnace wall which is to come into contact with the layer of the slag 3 includes MgO-C bricks lined as the second refractory layer 113 on the inner side of the furnace, Al₂O₃-SiO₂ bricks lined as the first refractory layer 112, then a ceramic sheet, and finally a cooling means including an iron jacket. In addition, the structure of the furnace wall which is to come into contact with the layer of the metal 4 includes MgO-C bricks lined from the second refractory layer 113 on the inner side of the furnace, Al₂O₃-SiO₂ bricks as the first refractory layer 112, and then a heat insulating sheet. The furnace wall structure of the electric furnace 1 as described above, for example, can be made so that the overall heat transfer coefficient of the side wall 11B of the furnace body 11 in a region which is to come into contact with the layer of the metal 4, is lower than the overall heat transfer coefficient of the side wall 11A of the furnace body 11 in a region which is to come into contact with the layer of the slag 3.

It should be noted that for the side wall structure, the above-described lower overall heat transfer coefficient on the layer of the metal 4 means that heat remains, and that there is a larger risk of molten body leakage when the refractories have any damaged site. Therefore, it is preferred that the side wall not have a metal block structure including a water cooling type jacket structure and a water cooling type pipe, but include refractories, and also at least the inner side of the side walls 11A and 11B which are to come into contact with the layers of the metal 4 and the slag 3 include refractory bricks.

### <<2. Method for producing valuable metal using electric furnace>>

The method for producing a valuable metal according to the present embodiment is a method for separating and recovering from a raw material containing copper (Cu) such as waste lithium ion batteries the copper and other valuable metals (e.g. Ni, Co). Therefore, this method can be rephrased as a method for recovering a valuable metal. The method according to the present embodiment mainly uses a pyrometallurgical process, but can include a pyrometallurgical process and a hydrometallurgical process.

The method according to the present embodiment has the following steps: preparing a raw material including copper (Cu) (preparation step), obtaining a molten material (reduced material) including alloy and slag by reductively heating and melting the prepared raw material (reduction melting step), and separating the obtained slag to recover the alloy including the valuable metal (slag separation step).

In the reduction heating step, an electric furnace including electrodes in the interior thereof is used when heating and melting the raw material, and the raw material is charged into the electric furnace. In the electric furnace, for example, an electric current is applied to the electrodes in a state in which the electrode tip is soaked in the slag, and the raw material is heated and melted with heat from the arc discharge and Joule heat. It should be noted that the heating method is not limited thereto.

As described above, the method according to the present embodiment is a method for producing a valuable metal from the raw material containing copper (Cu) such as waste lithium ion batteries, and the valuable metal is to be recovered. When using the raw material including waste lithium ion, for example, the valuable metal to be recovered is at least one metal or alloy selected from the group consisting of copper (Cu), nickel (Ni), cobalt (Co) and a combination thereof.

### [Preparation step]

In the preparation step, the raw material is prepared. The raw material is to be treated to recover the valuable metal, and contains at least copper (Cu). In addition, the raw material including waste lithium ion batteries contains as the valuable metal at least one valuable metal selected from the group consisting of copper, nickel (Ni), cobalt (Co) and a combination thereof. The raw material may include these components (Cu, Ni, Co) in the form of metal or alloy, or in the form of a compound such as an oxide. The raw material may also include other inorganic components and organic components other than these components (Cu, Ni, Co).

In addition, the raw material is not limited as long as it includes a valuable metal. Examples thereof include waste lithium ion batteries as described above, and also include an electronic part and an electronic device that include a dielectric material or a magnetic material. The form of the raw material is also not limited as long as it is suitable for treatments in the subsequent steps. Furthermore, in the preparation step, the raw material may be subjected to e.g. a grinding treatment to obtain a suitable form, and the raw material may be also subjected to e.g. a heat treatment or a fractionation treatment to remove unwanted components such as moisture and organic substances.

It should be noted that the "waste lithium ion battery" encompasses not only used lithium ion batteries but also waste materials in the production process of lithium ion batteries, such as defective products generated in the production process of e.g. a positive electrode material included in the batteries, and residues and leavings inside the production process. Therefore, the waste lithium ion batteries can be referred to as lithium ion battery waste material.

### [Reduction melting step]

In the reduction melting step, the raw material prepared in the preparation step is charged into the melting furnace, and is heated and melted (reduction melting) in the melting furnace to obtain a reduced material including metal (alloy) and slag. More specifically, the raw material is heated and melted to form a molten material. This molten material includes molten metal and molten slag. The molten metal and slag differ in specific gravity and thus the layer of the metal (metal layer) and the layer of the slag located on the metal layer are formed due to gravity separation in the molten material. In the molten material, for example, the gravity separation of the slag and the metal occurs so that when the thickness of the layer of the slag formed in the upper layer is divided by the thickness of the layer of the metal formed in the lower layer, the value is 1 or more.

In addition, the metal includes mainly a valuable metal. Therefore, the valuable metal and other components can be separated as the metal and the slag. This is because a low-added-value component (Al, etc.) has a high oxygen affinity whereas the valuable metal has a low oxygen affinity. For example, aluminum (Al), lithium (Li), carbon (C), manganese (Mn), phosphorus (P), iron (Fe), cobalt (Co), nickel (Ni) and copper (Cu) are commonly oxidized in order of Al > Li > C > Mn > P > Fe > Co > Ni > Cu. That is, aluminum (Al) is most easily oxidized, and copper (Cu) is most resistant to oxidation. The low-added-value component (Al, etc.) is easily oxidized to form the slag, and the valuable metal (e.g. Cu, Ni, Co) is reduced to form the metal (alloy). In this way, the valuable metal and the low-added-value component can be separated into the metal (alloy) and the slag.

The method according to the present embodiment is characterized by using the electric furnace 1 having the characteristic structure described above as the melting furnace. That is, the electric furnace 1 is used as the melting furnace, which is configured so that the overall heat transfer coefficient of the side wall 11B of the furnace body 11 in a region which is to come into contact with the layer of the metal 4 is lower than the overall heat transfer coefficient of the side wall 11A of the furnace body 11 in a region which is to come into contact with the layer of the slag 3, provided that the layers are generated by heating and melting the raw material 2 (see also Fig. 1). It should be noted that descriptions of the specific structure of the electric furnace 1 are as described above and omitted herein.

In the reduction melting treatment, the raw material 2 is injected (charged) into the electric furnace 1 including the electrodes 12 in the interior thereof, and an electric current is applied to the electrodes 12 to heat and melt the raw material. As described above, the furnace wall refractory corrosion can be prevented by employing an internal heating method in which heating is performed by the electrodes 12 in the interior of the furnace. That is, in the internal heating method, the molten body (molten raw material) located in the vicinity of the electrodes has the highest temperature. Therefore, the furnace wall is maintained at a lower temperature than that of the molten body. Contrarily, in the conventional procedure using an induction furnace, the external heating method is used in which the raw material is heated by heat transfer from a crucible, and the external heating method has a problem in that crucible refractory corrosion is greater since the crucible is required to be maintained at a higher temperature than that of the molten body.

The electric furnace 1 is preferably a submerged arc furnace. The submerged arc furnace is one of arc furnaces. The arc furnace uses heat generation of the arc itself, and can achieve local heating and rapid heating using ultra-high temperature and high energy density. Among the arc furnaces, a direct arc furnace has electrodes in space provided above a material to be heated, and an arc is generated in the space to heat the material to be heated. In addition, an indirect arc furnace generates an arc between a plurality of electrodes to heat the material to be heated mainly by radiation heat. On the other hand, the submerged arc furnace has a plurality of electrodes embedded (submerged) in the material to be heated, and uses Joule heat (electrical resistance heat) together with heat from the arc discharge. Specifically, the arc discharge is generated between the electrode tip and the material to be heated, and this arc heats the material to be heated (raw material). At the same time, an electric current flows between an electrode and an electrode through the material to be heated (among one electrode, the material to be heated and another electrode), and the material to be heated (slag) generates heat also by Joule heat.

The submerged arc furnace has an advantage of being capable of efficient heating by a small amount of electric power. In the direct arc furnace and the indirect arc furnace, the arc discharge is generated above the material to be heated. A considerable part of the generated heat is thus released into an atmosphere, and energy losses are greater. In addition, dust is easily generated from the material to be heated due to impacts by the arc, and it is required to provide a dust treating means. Furthermore, when an electrode is close to the furnace wall, the furnace wall refractories are easily damaged by heat, which may have an adverse effect on the durability of the refractories. Contrarily, a minor amount of heat is released in the submerged arc furnace since the electrodes are covered with the material to be heated. In addition, the submerged arc furnace has less dust generation and less heat damage to the refractories, and can reduce costs for the dust treatment and replacement of refractories. From these reasons, the reduction melting treatment can be performed at high efficiency and lower costs.

In particular, when waste lithium ion batteries, for example, are used as the raw material, the amount of the slag generated is about 3 times greater than the amount of the alloy generated in terms of volume ratio. It is important to ensure heat transfer to the alloy through the slag in order to maintain the alloy to a molten state. Since lithium components included in waste lithium ion batteries form slag and has a great effect on refractory erosion at high temperatures, it is also important to suppress the erosion. In this respect, since the direct arc heating furnace and indirect arc heating furnace locally heat only the surface of the slag by the arc discharge, it is required to increase electric power to fuse the whole alloy. Contrarily, the submerged arc furnace uses not only the arc discharge but also Joule heat, and thus heat conduction to the alloy through the slag is efficient. Therefore, efficient heating can be performed even by a small amount of electric power. In addition, since the electrode tip is embedded in the slag, heat distribution is relatively uniform and heat spots are not easily generated, and thus refractory corrosion can be suppressed.

When heating and melting the raw material, the soak depth of the electrodes 12 is preferably adjusted depending on the melting point of the metal formed. When the melting point of the metal is very close to the melting point of the slag, or the melting point of the metal is higher than the melting point of the slag, the metal is difficult to maintain the molten state. In such case, by soaking the electrodes 12 deeply inside the slag, it is easy to transfer the Joule heat generated at the electrode tip to the metal and thus maintain the molten state of the metal. On the other hand, when the melting point of the metal is lower, the metal can be sufficiently maintained to the molten state even when the soak depth of the electrodes 12 is shallow.

In the electric furnace 1, a graphite electrode can be used as the electrode 12. The present inventors examined that even in the internal heating using the graphite electrode, the amount of carbon incorporated into the material to be heated (raw material) was not too high, and did not cause a problem in controlling the oxidation reduction degree. The carbon from the electrode 12 can be also used as a reductant by preliminarily examining the amount of carbon incorporated into the material to be heated. Therefore, when adjusting the reduction degree by adding a reductant such as carbon, the amount of the reductant used can be reduced.

An electrode controlling device for adjusting the vertical position of the electrode 12, i.e. a device for controlling the position of the electrode to apply a constant electric current value may be provided as needed. This device can maintain the interval between the electrode 12 tip and the surface of the material to be heated at a constant distance even when the position of the surface of the raw material (or a molten body thereof) varies vertically during the operation of the electric furnace 1, or a state in which the electrode 12 tip is soaked from the surface of the material to be heated at a constant distance, and thus stable heating can be performed.

In addition, when heating and melting the raw material, it is preferred to provide a covering layer including an additional raw material by further injecting the additional raw material on the slag (open choke feed). Therefore, the raw material can be efficiently heated and melted. That is, when heating and melting the raw material, a high temperature gas is generated. Heat exchange occurs between the high temperature gas and the raw material by providing the covering layer including the raw material on the top surface of the slag, and the generated heat can be effectively used to melt the raw material.

In addition, a reductant may be introduced (added) in the raw material in the reduction melting treatment. Carbon and/or carbon monoxide is preferably used as the reductant. Carbon has an ability of easily reducing the valuable metal to be recovered (e.g. Cu, Ni, Co). For example, 1 mol of carbon can reduce 2 mol of a valuable metal oxide (copper oxide, nickel oxide, etc.) Therefore, the oxidation reduction degree can be strictly adjusted by introducing a suitable amount of carbon. In addition, a reduction procedure using carbon or carbon monoxide is much safer than a procedure using a metal reductant (e.g. thermite reaction method using aluminum). Artificial graphite and/or natural graphite can be used as carbon, and e.g. coal and coke can be also used as long as there is not a risk of impurity contamination.

In the reduction melting treatment, a flux may be also introduced (added) in the raw material. When adding the flux, the melting treatment temperature can be lowered, and also phosphorus (P) can be further removed. The flux preferably includes an element which forms a basic oxide having a low melting point by incorporating an impurity element. Phosphorus is oxidized to form an acid oxide, and thus as the basicity of the slag generated in the reduction melting treatment increases, phosphorus is easily incorporated into the slag and removed. In particular, a flux including a calcium compound which is inexpensive and stable at normal temperature is more preferred. Examples of the calcium compound can include calcium oxide (CaO) and calcium carbonate (CaCO₃).

The heating temperature in the reduction melting treatment is not particularly limited, and is more preferably 1300°C or higher and 1400°C or lower as the metal temperature and 1500°C or higher and 1600°C or lower as the slag temperature. In the method according to the present embodiment, since the reduction heating treatment is performed using the electric furnace 1 having the side wall structure as described above, the wasteful consumption of energy can be prevented by suppressing excess heat transfer from the layer of the metal 4 to the furnace wall, and also the slag temperature can be lowered, and thus refractory consumption can be effectively suppressed.

### [Preliminary heating step (oxidative roasting step)]

The method according to the present embodiment can include a step of preliminarily heating (oxidatively roasting) the raw material to obtain a preliminarily heated material (oxidatively roasted material) (preliminary heating step) can be provided prior to the reduction melting treatment (the treatment in the melting step) as needed.

In the preliminary heating step, the raw material used in the melting step is preliminarily heated to reduce the amount of carbon included in the raw material. Even when the raw material used in the melting step includes an excessive amount of carbon, the carbon can be effectively oxidized and removed by such preliminary heating step, and the integration of the valuable metal into the alloy can be promoted in the heating and melting treatment in the subsequent melting step.

More specifically, the valuable metal is reduced to form localized molten fine particles in the heating and melting treatment in the melting step, and at this time, carbon in the raw material may be a physical obstacle in the aggregation of the molten fine particles (valuable metal). When the aggregation and integration of the molten fine particles are hindered, the separation of the alloy and the slag generated is hindered, and the recovery rate of the valuable metal may be reduced. Contrarily, when carbon is removed by preliminarily heating the raw material in the preliminary hating step prior to the heating and melting treatment, the aggregation and integration of the molten fine particles efficiently proceed, and the recovery rate of the valuable metal can be further increased. In addition, since phosphorus is an impurity element which is relatively easily reduced, there is a risk that phosphorus is reduced and then incorporated into the alloy together with the valuable metal when an excessive amount of carbon exists in the raw material. In this respect, the incorporation of phosphorus into the alloy can be prevented by preliminarily removing an excessive amount of carbon in the raw material by preliminary heating.

It should be noted that the amount of carbon in the preliminarily heated material (oxidatively roasted material) obtained by the preliminary heating treatment is preferably less than 1 mass%.

Variations in oxidation can be also suppressed by the preliminary heating step. In the preliminary heating step, the preliminary heating treatment (oxidative roasting) is desirably performed at an oxidation degree in which a low-added-value metal (Al, etc.) included in the raw material used in the melting step can be oxidized. On the other hand, the oxidation degree can be easily controlled by adjusting the temperature, time and/or atmosphere for the preliminary heating treatment. Therefore, the oxidation degree can be more strictly adjusted in the preliminary heating treatment, and variations in oxidation can be suppressed.

It should be noted that the oxidation degree is adjusted as follows. As described above, aluminum (Al), lithium (Li), carbon (C), manganese (Mn), phosphorus (P), iron (Fe), cobalt (Co), nickel (Ni) and copper (Cu) are commonly oxidized in order of Al > Li > C > Mn > P > Fe > Co > Ni > Cu. When aluminum (Al) is included in the raw material, oxidation is allowed to proceed until the whole amount of Al is oxidized in the preliminary heating step. Oxidation may be promoted until part of iron (Fe) is oxidized; however, the oxidation degree is preferably maintained to an extent in which oxidized cobalt (Co) is not distributed to the slag.

The preliminary heating treatment is preferably performed in the presence of an oxidant. Therefore, carbon (C), an impurity element, can be efficiently oxidized and removed. The oxidant is also not particularly limited, and is preferably an oxygen-containing gas (air, pure oxygen and oxygen-enriched gas, etc.) from the viewpoint of ease of handling. The amount of the oxidant introduced is preferably, for example, about 1.2 times greater than the chemical equivalent required to oxidize each substance to be oxidized.

The heating temperature in the preliminary heating is preferably 700°C or higher and 1100°C or lower. When the temperature is 700°C or higher, the oxidation efficiency of carbon can be further increased, and the oxidation time can be reduced. In addition, when the temperature is 1100°C or lower, heat energy costs can be kept low, and the preliminary heating efficiency can be increased. The preliminary heating temperature may be also 800°C or higher and 900°C or lower.

The preliminary heating treatment can be performed using a known roasting furnace. It is also preferred to use a furnace different from the melting furnace used in the treatment in the subsequent melting step (preliminary furnace), and to perform the preliminary heating treatment in the preliminary furnace. Every type of furnace can be used as the preliminary heating furnace as long as it is a furnace which can feed an oxidant (oxygen, etc.) while roasting the raw material to be treated and can perform the oxidation treatment in the interior thereof. Examples thereof include a rotary kiln and a tunnel kiln (hearth furnace) which are conventionally known.

### [Slag separation step]

In the slag separation step, the slag is separated from the molten material obtained by heating and melting in the melting step to recover the metal (alloy) including the valuable metal. The metal and the slag differ in specific gravity. The slag with a lower specific gravity than that of the metal gathers on the metal, and thus the metal can be easily separated and recovered by gravity separation. It should be noted that the raw material is fused using the electric furnace 1 to obtain the molten material including the slag and the metal, and then the slag and the metal can be discharged from a discharge path for the slag and a discharge path for the metal, respectively. That is, the melting step and the slag separation step can be performed in the same furnace.

After the treatment in the slag separation step as described above, a sulfurization step of sulfurizing the obtained metal and a grinding step of grinding the obtained sulfide or metal may be performed. Furthermore, the metal (alloy) including the valuable metal obtained after such pyrometallurgical process may be subjected to a hydrometallurgical process. It is possible to remove impurity components, separate and purify the valuable metal (e.g. Cu, Ni, Co), and recover each valuable metal by the hydrometallurgical process. Examples of treatments in the hydrometallurgical process include known procedures such as a neutralization treatment and a solvent extraction treatment.

### <<3. Method for producing valuable metal from waste lithium ion batteries>>

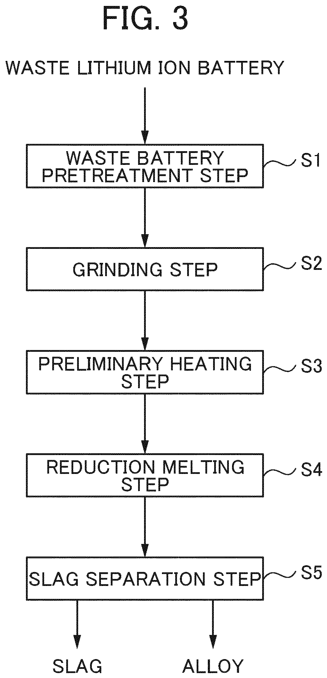

Fig. 3 is a flow chart showing an example of the flow of the method for producing a valuable metal from waste lithium ion batteries. As shown in Fig. 3, this method has obtaining waste battery contents by removing electrolyte solutions and outer cases of the waste lithium ion batteries (waste battery pretreatment step S1), obtaining a ground material by grinding the waste battery contents (grinding step S2), obtaining a preliminarily heated material by preliminarily heating the ground material (preliminary heating step S3), obtaining a molten material by melting the preliminarily heated material (reduction melting step S4), and separating the slag from the molten material to recover the alloy (slag separation step S5).

The sulfurization step of sulfurizing the obtained alloy and the grinding step of grinding the obtained sulfide or alloy, which are not shown, may be also performed after the slag separation step S5.

### [Waste battery pretreatment step]

The waste battery pretreatment step S1 is performed for the purpose of preventing waste lithium ion battery explosion and making them harmless. Lithium ion batteries are in the form of a closed system, and thus have e.g. an electrolyte solution in the interior thereof. Therefore, when the batteries are directly ground, there is a risk of explosion, which is dangerous. It is preferred to perform an electric discharge treatment and a treatment for removing an electrolyte solution by any procedure. As described above, safer treatments can be performed by removing the electrolyte solution in the waste battery pretreatment step S1.

A specific method for the waste battery pretreatment is not particularly limited. Examples thereof include a procedure in which a hole is physically made on a waste battery with a needle-shaped edge to remove the electrolyte solution thereof. There is also a procedure in which the electrolyte solution of a waste battery is burned by heating to make the battery harmless.

### [Grinding step]

In the grinding step S2, the waste lithium ion battery contents are ground to obtain a ground material. The treatment in the grinding step S2 is for the purpose of increasing reaction efficiency in the pyrometallurgical process. The recovery rate of the valuable metal (Cu, Ni, Co) can be increased by increasing the reaction efficiency. A specific grinding method is not particularly limited. A conventionally known grinder such as a cutter mixer can be used for the grinding.

Metals for the outer case, aluminum (Al) and iron (Fe), can be easily physically sorted by e.g. an aluminum sorter using eddy current and a magnetic sorter. In addition, e.g. a sieve shaker can be used to obtain a foil-shaped negative current collector (copper foil, etc.) or positive current collector (aluminum foil, etc.) (hereinafter referred to as "foil-shaped material") as the oversize material, and a powder negative active material (graphite, etc.) or positive active material (lithium nickelate, lithium cobaltate, etc.) (hereinafter referred to as "powder material") as the undersize material.

It should be noted that the waste battery pretreatment step and the grinding step together correspond to the preparation step described above.

### [Preliminary heating step]

In the preliminary heating step (oxidative roasting step) S3, at least the powder material obtained in the grinding step S2 is preliminarily heated (oxidatively roasted) to obtain a preliminarily heated material (oxidatively roasted material). The details of this step are as described above. Even when the raw material used in the reduction melting step S4 includes an excessive amount of carbon, the carbon can be effectively oxidized and removed by preliminary heating in the preliminary heating step, and the integration of the valuable metal into the alloy can be promoted in the heating and melting treatment.

### [Reduction melting step]

In the reduction melting step S4, at least the preliminarily heated material obtained in the preliminary heating step S3 is charged into the melting furnace and then heated and melted to obtain the molten material including the alloy (metal) and the slag.

The details of this step are as described above. In particular the method according to the present embodiment is characterized by using the electric furnace 1 having the characteristic structure described above as the melting furnace. That is, as the melting furnace, the electric furnace 1 is used, which is designed so that the overall heat transfer coefficient of the side wall 11B of the furnace body 11 in a region which is to come into contact with the layer of the metal 4 is lower than the overall heat transfer coefficient of the side wall 11A of the furnace body 11 in a region which is to come into contact with the layer of the slag 3, provided that the layers are formed by heating and melting the raw material 2 (see also Fig. 1). According to the method, the wear of the electric furnace for the reduction melting treatment can be effectively suppressed, and simultaneously the alloy including the valuable metal can be effectively generated.

In the reduction melting treatment, the preliminarily heated material is charged into the electric furnace 1, and an electric current is then applied to the electrodes 12 to melt the preliminarily heated material (charged material) with heat from the arc discharge and/or Joule heat. As described above, furnace wall refractory corrosion can be prevented using the electric furnace including electrodes in the interior thereof by employing an internal heating method in which heating is performed with the electrodes 12 in the interior of the furnace. It should be noted that a submerged arc furnace is preferably used as the electric furnace 1 including electrodes in the interior thereof.

### [Slag separation step]

In the slag separation step S5, the slag is separated from the molten material obtained in the reduction melting step S4 to recover the alloy. The details of this step are as described above.

It should be noted that the sulfurization step and the grinding step may be performed after the slag separation step. Furthermore, the obtained alloy including the valuable metal may be subjected to the hydrometallurgical process.

### EXAMPLES

The present invention will now be described in more detail by way of examples thereof. It should be noted, however, that the present invention is not limited to the following example in any way.

### (1) Production of valuable metal

### <<Example 1»

Waste lithium ion batteries were used as a raw material to produce valuable metals. When heating and melting the raw material, an electric furnace including electrodes in the interior thereof was used as a melting furnace. Specifically, the electric furnace was made so that the overall heat transfer coefficient of the side wall 11B of the furnace body 11 in a region which is to come into contact with the layer of metal is lower than the overall heat transfer coefficient of the side wall 11A of the furnace body 11 in a region which is to come into contact with the layer of slag 3, provided that the layers are generated by heating and melting the raw material (see Fig. 2) .

### [Waste battery pretreatment step, and grinding step (preparation step)]

Waste lithium ion batteries as the raw material were made harmless, and then roughly crushed using a crusher to a size of 5 mm or less. Aluminum (Al) and Fe included in the outer case were sorted using an aluminum sorter and a magnetic sorter, and a sieve shaker was then used to obtain a foil-shaped material as the oversize material and a powder material as the undersize material.

### [Preliminary heating step]

The obtained powder material was preliminarily heated (oxidatively roasted) at 800°C to remove carbon, and a preliminarily heated material (oxidatively roasted material) was obtained. It should be noted that the amount of carbon included in the preliminarily heated material was less than 1 mass%.

### [Reduction melting step]

To a total of 50 kg of the preliminarily heated material and foil-shaped material, 1.14 kg of graphite powder was added as a reductant, and 7.52 kg of calcium carbonate (CaCO₃) was further added as a flux. The amount of the reductant added was adjusted to an amount suitable to reduce copper (Cu), nickel (Ni) and cobalt (Co) in the preliminarily heated material. The amount of the flux added was also adjusted to an amount which lowers the melting point of the slag by the eutectic reaction of calcium oxide and alumina.

Subsequently, the raw material (mixture of the preliminarily heated material, the reductant and the flux) was charged into the electric furnace and heated and melted at a slag temperature of 1550°C and a metal temperature of 1350°C. The operation time in the reduction melting step was 100 hours. As described above, the slag and the alloy (metal) were obtained. At this time, the thickness of the slag layer generated in the electric furnace was about 160 mm, the thickness of the metal layer was about 50 mm, and the thickness of the slag layer was about 3 times greater than the thickness of the metal layer.

It should be noted that the side wall of the electric furnace (furnace wall) was constructed by heat insulating bricks, and the inner diameter thereof was 800 mm. In addition, the structure of the side wall of the electric furnace which is to come into contact with the slag layer included, from the inner side of the furnace, lining MgO-C bricks with a thickness of 110 mm, then lining Al₂O₃-SiO₂ bricks with a thickness of 130mm, then a ceramic sheet and finally a cooling means including an iron jacket, and the overall heat transfer coefficient was 4.8 W/m²K. In addition, the structure of the side wall of the electric furnace which is to come into contact with the metal layer included, from the inner side of the furnace, lining MgO-C bricks with a thickness of 110 mm, then lining Al₂O₃-SiO₂ bricks with a thickness of 130 mm, and then a 10 mm heat insulating sheet, and the overall heat transfer coefficient was 2.6 W/m²K. The electric furnace included 3 graphite electrodes in the interior thereof, and had a rated output of 199 kVA and a maximum voltage of 228 V. Furthermore, the electrodes were placed so that the graphite electrode tip did not come into contact with the molten alloy.

### [Slag separation step]

After the reduction melting treatment, the generated slag was separated to recover the alloy. This was considered the recovered alloy. It should be noted that the alloy was recovered in the same electric furnace as in the reduction melting treatment.

### <<Comparative Example 1>>

In Comparative Example 1, the raw material was heated and melted using an electric furnace different from the electric furnace used in Example 1. Specifically, an electric furnace was used, in which the overall heat transfer coefficient of a side wall of the electric furnace which is to come into contact with the generated layer of the metal was the same as the overall heat transfer coefficient of a side wall of the electric furnace which is to come into contact with the layer of the slag. It should be noted that the metal temperature was 1350°C. In order to obtain this temperature, the slag temperature was 1650°C. The valuable metals were recovered in the same manner except for the above.

### (2) Evaluation

Various characteristics in Example 1 and Comparative Example 1 were evaluated as described below.

### (Component analysis)

The preliminarily heated material, and the alloy and the slag after being cooled were ground, and each component was analyzed by X-ray fluorescence. The distribution coefficients to the alloy and the slag were also calculated from the amount of each element.

### (Refractory corrosion amount)

The corrosion amount of refractories included in an electric furnace used in the treatment in the reduction melting step was visually evaluated.

### (3) Results

The composition of the preliminarily heated materials obtained in Example 1 and Comparative Example 1 is shown in Table 1 below. The preliminarily heated material included mainly copper (Cu), nickel (Ni), cobalt (Co), aluminum (Al), lithium (Li), iron (Fe) and manganese (Mn), and further trace amounts of phosphorus (P) and silicon (Si). It should be noted that the composition in Table 1 below is expressed as values in "mass%."

**[Table 1]**

| | Composition (mass%) | | | | | | | | |
|---|---|---|---|---|---|---|---|---|---|
| Element | Cu | Ni | Co | Al | Li | Fe | P | Mn | Si |
| Amount | 30.7 | 16.9 | 4.0 | 10.4 | 3.0 | 2.3 | 0.5 | 3.0 | 0.5 |

Table 2 below shows the results of the distribution coefficient of each element to the alloy and the slag in Example 1. As shown in Table 2, the valuable metals, copper (Cu), nickel (Ni) and cobalt (Co), were distributed to the alloy (metal) at high distribution coefficients. Contrarily, manganese (Mn), phosphorus (P), aluminum (Al), lithium (Li), silicon (Si) and calcium (Ca) were mostly distributed to the slag. This found that the recovery rates of copper (Cu), nickel (Ni) and cobalt (Co) were all high, and components which are desirably removed such as manganese (Mn) and phosphorus (P) could be nearly removed from the alloy.

**[Table 2]**

| | Distribution coefficient (%) | | | | | | | | | |
|---|---|---|---|---|---|---|---|---|---|---|
| Element | Cu | Ni | Co | Fe | Mn | P | Al | Li | Si | Ca |
| Metal | 100 | 100 | 97 | 75 | 1 | 0 | 0 | 0 | 0 | 0 |
| Slag | 0 | 0 | 3 | 25 | 99 | 100 | 100 | 100 | 100 | 100 |

Table 3 below shows the results of the amount of phosphorus (P) included in the alloy, the distribution coefficient of cobalt (Co) to the alloy, and the refractory corrosion amount in Example 1 and Comparative Example 1. As shown in Table 3, the distribution coefficients were good both in Example 1 and Comparative Example 1. That is, the recovery rate of cobalt (Co) was high, above 97%, and also the amount of phosphorus (P) in the alloy was less than 0.001 mass%. In addition, the copper grade in the obtained metal was 48 mass% in both the examples.

On the other hand, it was found that for the refractory corrosion amount, the corrosion of magnesia, a refractory, was 16 mm in the electric furnace used in Comparative Example 1, while the corrosion of magnesia was very small, less than 3 mm, in the electric furnace used in Example 1.

As described above, it was found that according to the method in Example 1, the wear of the electric furnace for the reduction melting treatment could be effectively suppressed, and also a valuable metal could be effectively produced.

**[Table 3]**

| | Furnace wall refractory combination | Overall heat transfer coefficient (W/m2K) | Co recovery rate (mass%) | Amount of P in metal (mass%) | Refractory corrosion |
|---|---|---|---|---|---|
| Example1 | MgO-C bricks, Al2O3-SiO caster [Region coming into contact with slag layer] | Furnace wall of slag layer : 4.8 | 97.4 | <0.001 | < 3mm |
| | Ceramic sheet, jacket coolingcopper [Region coming into contact with metal layer] | Furnace wall of metal layer : 2.6 | | | |
| | Heat insulating sheet, no cooling jacket | | | | |
| Comparative Example1 | MgO-C bricks, Al2O3-SiO caster [Region coming into contact with slag layer] | Furnace wall of slag layer : 4.8 | 97.3 | <0.001 | 16mm |
| | Ceramic sheet, copper jacket cooling [Region coming into contact with metal layer] (same as above) | Furnace wall of metal layer :4.8 | | | |

### EXPLANATION OF REFERENCE NUMERALS

1 Electric furnace
11 Furnace body
11A, 11B (Inner) side wall
111 Iron shell
112 First refractory layer
113 Second refractory layer
12 Electrode
13 Raw material injection pipe
14 Slag hole
14a Lower end (of the slag hole)
15 Metal hole
15a Upper end (of the metal hole)

## Claims

1. An electric furnace for heating and melting a raw material containing a valuable metal, comprising:
a furnace body, and
a plurality of electrodes provided so as to hang down from a top section of the furnace body to an interior thereof,
the electric furnace heating and melting the raw material in the furnace body by applying an electric current to the electrodes to generate a molten material consisting of slag and metal,
the electric furnace being made so that an overall heat transfer coefficient of a side wall of the furnace body which is to come into contact with a layer of the metal formed in a lower layer in gravity separation of the molten material obtained is lower than an overall heat transfer coefficient of a side wall of the furnace body which is to come into contact with a layer of the slag formed in an upper layer of the gravity separation of the molten material.

2. The electric furnace according to claim 1,
wherein a metal hole to discharge the metal is provided on a side wall of the furnace body corresponding to a position where the layer of the metal is formed, and
the electric furnace is made so that an overall heat transfer coefficient of a side wall of the furnace body below an upper end of the metal hole is lower than an overall heat transfer coefficient of a side wall of the furnace body above the upper end of the metal hole.

3. The electric furnace according to claim 1 or 2,
wherein the side wall of the furnace body comprises at least an iron shell, a first refractory layer formed by an unshaped refractory or a shaped refractory, and a second refractory layer formed by a shaped refractory in order from outside thereof.

4. The electric furnace according to any one of claims 1 to 3,
wherein the electric furnace is used for producing a valuable metal from a raw material comprising waste lithium ion batteries.

5. A method for producing from a raw material containing a valuable metal comprising copper (Cu) the valuable metal, comprising:
a reduction melting step of charging the raw material into a melting furnace and performing a reduction melting treatment of the raw material to obtain a molten material comprising slag and metal containing the valuable metal,
the electric furnace according to claim 1 being used as the melting furnace.

6. The method for producing a valuable metal according to claim 5,
wherein, in the molten material obtained by the reduction melting treatment in the reduction melting step, a value obtained by dividing a thickness of a layer of the slag formed in an upper layer in the gravity separation of the molten material by a thickness of a layer of the metal formed in a lower layer in the gravity separation is 1 or more.

7. The method for producing a valuable metal according to claim 5 or 6,
wherein the raw material comprises waste lithium ion batteries.

8. The method for producing a valuable metal according to any one of claims 5 to 7,
wherein the metal obtained after the reduction melting step contains 30 mass% or more of copper.

9. The method for producing a valuable metal according to any one of claims 5 to 8,
wherein in the reduction melting step, the reduction melting treatment is performed so that a metal temperature is 1300°C or higher and 1400°C or lower and a slag temperature is 1500°C or higher and 1600°C or lower.
